# EUROPEAN PATENT SPECIFICATION

(11) **EP 1 002 620 B1**
(45) Date of publication and mention of the grant of the patent: **02.05.2003**
(21) Application number: 98830691.6
(22) Date of filing: 18.11.1998
(51) Int. Cl.: B23Q 1/48, B23Q 1/60

(54) **Machine tool with tilting tables**
Werkzeugmaschine mit Schwenktischen
Machine-outil avec tables basculantes

(43) Date of publication of application: 24.05.2000
(73) Proprietor: BACCI PAOLINO DI BACCI AGOSTINO, 56021 Cascina, Pisa (IT)
(72) Inventor: Ruggieri, Alberto, 56025 Pontedera, Pisa (IT)
(74) Representative: Mannucci, Gianfranco, Dott.-Ing.

(56) References cited:
- EP-A- 0 433 788
- EP-A- 0 744 244
- EP-A- 0 873 817
- CH-A- 560 581
- DE-U- 29 609 814
- GB-A- 2 293 994
- US-A- 1 394 912
- US-A- 2 881 667
- US-A- 4 984 351

## Description

The present invention relates to a machine tool for machining pieces of wood or similar, and particularly, but not exclusively, elongate pieces such as elements of chairs or other articles, according to the preamble of claim 1.

A machine of this type is described, for example, in EP-A-0873817, filed by the present applicant.

From EP-A-0744244 a machine tool is known, wherein the workpieces are supported by cantilever arms. These arms are in turn supported by a rotating beam. The axis of rotation of the beam is parallel to the horizontal axis of translation of the working head. The rotation of the support means formed by the cantilever arms is provided for moving the workpiece from a machining position to a loading and unloading position and vice-versa. The working head is provided with three linear motions along three mutually orthogonal axes.

The object of the present invention is a machine of the type described in EP-A-0873817 which has even greater versatility and which can be used to machine pieces on different faces, up to a maximum of six faces in one particularly advantageous embodiment.

This object is achieved with the combination of features of claim 1.

The fact that the dimension of the support means is adjustable along the third traversing axis makes the machine remarkably adaptable to pieces of various sizes and shapes. The possibility of oscillating the support means about the auxiliary axis allows the pieces to be machined on a large number of faces and, more particularly, along four edges of a theoretical rectangular supporting surface, as well as on the face opposite that bearing on the support means. In certain cases it is also possible to machine the sixth face of the piece, as will be made clear by the following detailed description of the examples of embodiment.

The high flexibility of the machine and its adaptability to the various operating conditions will be more clearly understood from the examples of embodiment and the modes of use of the machine which are described below.

In one particular embodiment of the invention, the single support means or each support means comprises a pair of uprights with a variable and adjustable gap between them. The uprights are movable with respect to each other in the direction parallel to the third traversing axis. In practice, one of the two uprights may be fixed and the other adjustable, or both may be adjustable.

Each upright may be associated with a crosspiece which is integral with it, in such a way that the distance between the crosspiece can be adjusted by varying the gap between the uprights. Two crosspieces delimit the two sides of a theoretical rectangular support surface for the workpieces.

In one possible embodiment, the guides along which one or both uprights of each support means are adjustable may be integral with a moving element which oscillates about the auxiliary horizontal axis of oscillation. The single support means or each support means, consisting for example of the oscillating element, the uprights and the crosspieces, may be fitted in a fixed position. In this case, the working head will be made capable of moving along the third horizontal traversing axis. In a preferred embodiment of the machine, however, the support means are in turn movable along corresponding systems of fixed guides extending along the third horizontal traversing axis.

In this way it is possible to have a long travel of the support means, and to construct a machine which operates in an oscillating cycle, with two separate support means which are brought alternately into a position for loading and removing the workpieces and into a machining position in the vicinity of the working head. In this case, suitable protection systems may be provided not only around the machining area but also between the machining area and the loading and removal area.

In a particularly simple embodiment of the invention, the single support means or each support means can oscillate about the auxiliary horizontal axis of oscillation between two terminal positions, in one of which the workpiece supporting surface is horizontal and the in the other of which the surface is vertical. In this case, the support means may be made to oscillate by means of a system of actuators and two fixed stops. It is also possible to provide three machining positions, one central and two separated by +90° and -90° from the central position. The three positions may consist of two horizontal and one vertical, or two vertical and one horizontal position. In this case, two fixed stops (to delimit the positions rotated through +90° and -90°) and an intermediate movable stop are provided.

In a more complex embodiment, it is possible to make the support means assume any position among said terminal positions. In this case, the auxiliary horizontal axis of oscillation is a shaft which is numerically controlled to enable the support means, and consequently the workpieces, to assume any selected position between the two terminal positions which are preferably separated by 90° or 180°.

In order to reduce the amount of chips, waste and machining residues falling on the traversing guides of the support means parallel to the third traversing axis, in an improved embodiment of the invention the support means are mounted so that they project from a vertical support which traverses along said guides. In this way, the machining residues, chips and waste fall in an area adjacent to the position of the traversing guide.

To increase further the versatility of the machine, the working head may be movable about a further axis of oscillation, orthogonal to the first axis of oscillation. In this case, the machine as a whole has three axes of oscillation or rotation, one being allocated to the workpiece supporting means and two being allocated to the working head, with a redundancy of axes. In this case, the working head is described as double-rotating. The redundant axis of rotation or oscillation in the working head meets a number of requirements. Indeed, single-rotating heads, in other words those having a single axis of oscillation or rotation, are frequently provided with a controlled rotary axis coinciding with the axis of the chuck. This axis has various functions, including:
- orienting small angular returns with drilling axes orthogonal to the axis of the chuck, for example in order to drill small enclosed elements, such as the frames of chairs, from the inside;
- orienting feelers for the operations of milling the whole perimeters of imperfect panels. These feelers must be located on the plane which contains the chuck axis and the point of contact between the tool and the workpiece;
- orienting radial blowers for the grinding wheels which are to grind the whole perimeters of panels.

In conventional machines with single-rotating working heads of the turret type, in other words those having a plurality of chucks arranged in various radial orientations about a single axis of rotation, it is necessary to have an auxiliary axis coinciding with the chuck axis for each of the various chucks with which the machine is provided, with a consequent complexity of the machine. In the absence of this, the machine will be found to have limited flexibility.

The use of one axis of oscillation for the support means and two axes of oscillation or rotation for the working head, in other words the use of a double-rotating working head, provides high flexibility of the machine with a very simple configuration. This is because the simultaneous presence of an axis of oscillation which allows the workpiece supporting plane to be positioned orthogonally to an axis of oscillation of the working head and of a plurality of chucks which can be positioned parallel to said axis of the head corresponds to the provision of a single common axis of oscillation for all the chucks instead of a number of auxiliary axes of oscillation equal to the number of chucks, as is the case in single-rotating turret heads.

Additionally, in a numerically-controlled machining center having rotating or oscillating tables according to the invention and a single-rotating turret head, the relative positions of the head and the workpiece support plane for executing a given operation (drilling a hole, for example) are unique. If the head is double-rotating, however, the relative positions of the head and the supporting plane are infinite, and this makes it possible to select those which, for a given machining cycle, do not give rise to collisions between the head, the workpiece, the workpiece support means and the securing means, thus providing greater flexibility and simplicity in the design of the machining cycle.

Further advantageous characteristics of the invention are indicated in the attached claims and will be described in greater detail in the following text with references to examples of embodiment.

The invention will be more clearly understood from the following description and the attached drawing, which shows practical nonrestrictive examples of the invention. In the drawing,
Fig. 1 is a front view of a machine according to the invention, comprising a pair of support means movable alternately into a machining position and into a position for loading and removing the workpieces, and with a working head oscillating about two axes of oscillation;
Fig. 2 is a plan view according to II-II in Fig. 1;
Fig. 3 is a side view according to III-III in Fig. 1;
Figs. 4, 5 and 6 are a side view, a front view and a plan view of an embodiment of the support means not having the movement along the third horizontal traversing axis, Figs. 5 and 6 being views according to V-V and VI-VI in Fig. 4;
Figs. 7 and 8 show two distinct positions, separated by 90° about the auxiliary horizontal axis of oscillation;
Figs. 9 and 10 are views according to IX-IX in Fig. 7 and X-X in Fig. 9 respectively of the workpieces and of a part of the support means, to provide a better understanding of the positioning of the pieces during machining;
Figs. 11 and 12 show a side view of the support means with two workpieces positioned parallel to the extension of the crosspieces delimiting the rectangular supporting surface, Fig. 12 being a schematic plan view according to XII-XII in Fig. 11;
Figs. 13 and 14 show the arrangement in Figs. 12 and 13 with the support means rotated through 90° for further machining operations;
Fig. 15 is a front view of a machine according to the invention an embodiment with support means mounted so that they project;
Figs. 16 and 17 are, respectively, a plan view according to XVI-XVI and a side view according to XVII-XVII in Fig. 15;
Fig. 18 is a side view of a machine according to the invention which machines the sixth face of a workpiece or of a series of workpieces;
Fig. 19 shows, in a front view, a particular application of the machine with the support means mounted so that they project; and
Fig. 20 is a plan view of the machine shown in Fig. 19 in a different application.

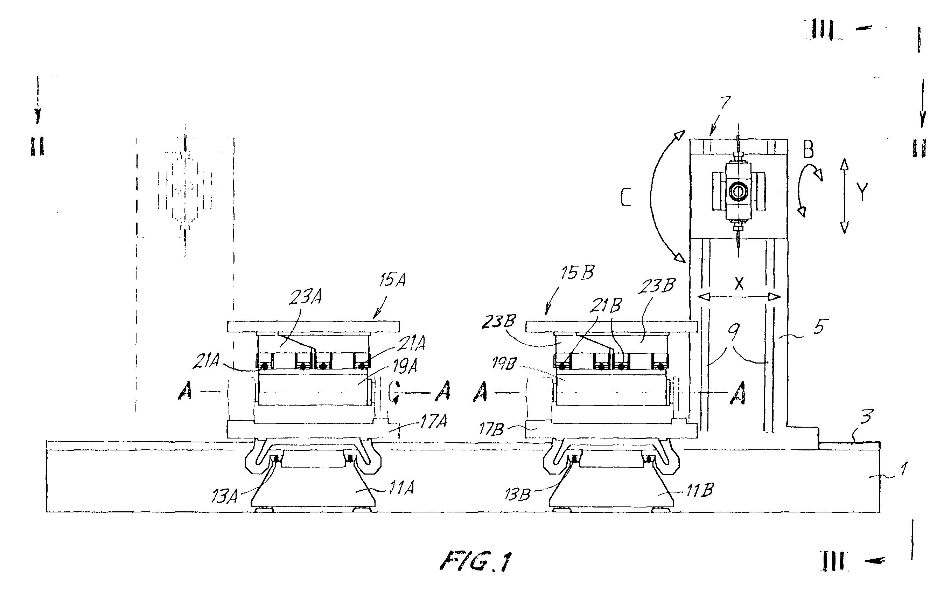

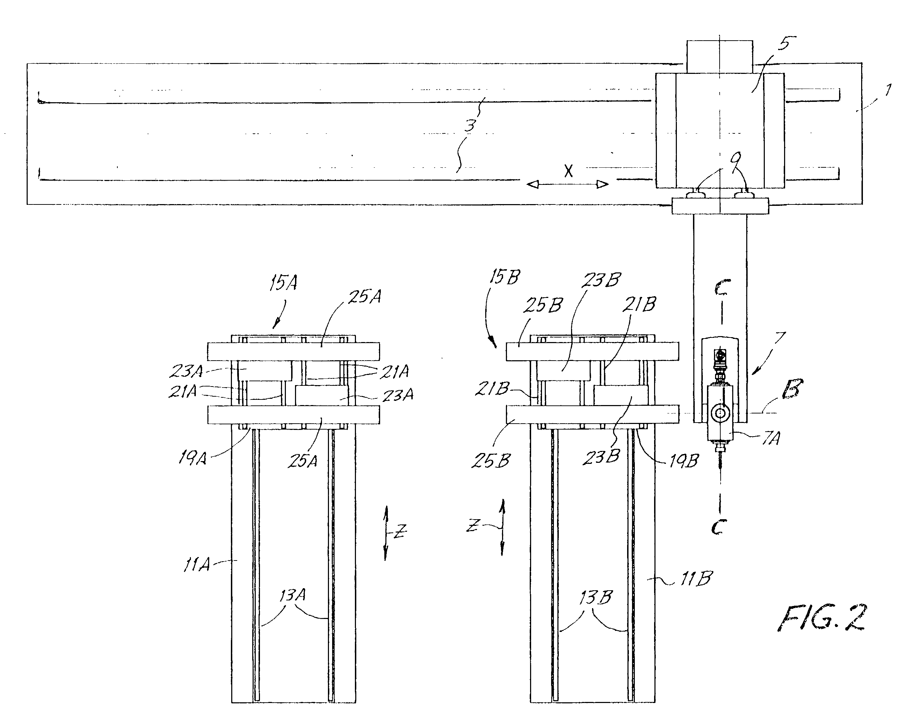

With reference to Figs. 1, 2 and 3, a description will now be given of a first embodiment of the machine according to the invention, equipped with a working head and a pair of support means which can operate in an oscillating cycle, in other words with a first support means in the machining position and the other in a loading and removing position, or vice versa. In this embodiment, the machine has a base 1 equipped with a system of guides 3 along which an upright 5, carrying a working head indicated in a general way by 7, is able to move. The upright 5 and consequently the working head 7 can thus move along a first horizontal traversing axis indicated by X to assume variable positions between two terminal positions indicated in Fig. 1 in solid lines and in broken lines respectively.

The working head 7, in turn, is movable along a pair of vertical guides 9 carried by the upright 5. In this way the working head can be made to move along a second vertical traversing axis Y. It can therefore assume any position in a vertical plane XY.

In the illustrated example, the working head comprises a set 7A of four chucks in cross configuration which can oscillate about a first horizontal axis of oscillation C and about a further axis of oscillation B orthogonal to the first. In Fig. 1 the axes of oscillation are indicated by arrows which identify the corresponding oscillatory movement. There may also be a different number of chucks, for example one or two. In the context of the present description and the attached claims, the term "oscillation" denotes any rotary movement about an axis, where said movement may be either oscillatory in the strict sense, in other words limited to a round angle or a fraction thereof, or a rotary movement.

Two auxiliary bases 11A, 11B are disposed orthogonally to the base 1, and corresponding guides 13A and 13B extend along these auxiliary bases, along a third horizontal traversing axis Z, orthogonal to the traversing axes X and Y. Support means indicated in a general way by 15A and 15B, on which the workpieces are placed, can move on the guides 13A and 13B. Each of the support means 15A, 15B (which are preferably identical to each other) has a carriage 17A, 17B carrying a moving element 19A, 19B which oscillates about an auxiliary horizontal axis of oscillation A. Each oscillating element 19A, 19B has a pair of guides indicated by 21A and 21B respectively, extending parallel to the guides 13A, 13B which extend along the horizontal traversing axis Z.

Pairs of uprights 23A, 23B are adjustable on the guides 21A, 21B. Each upright 23A, 23B carries a corresponding crosspiece 25A, 25B. The crosspieces 25A, 25B extend parallel to the axis X and each pair of crosspieces 25A, 25A and 25B, 25B delimits a theoretical rectangular supporting surface for the workpieces. The crosspieces 25A, 25B are associated with means (not shown) for securing the workpieces.

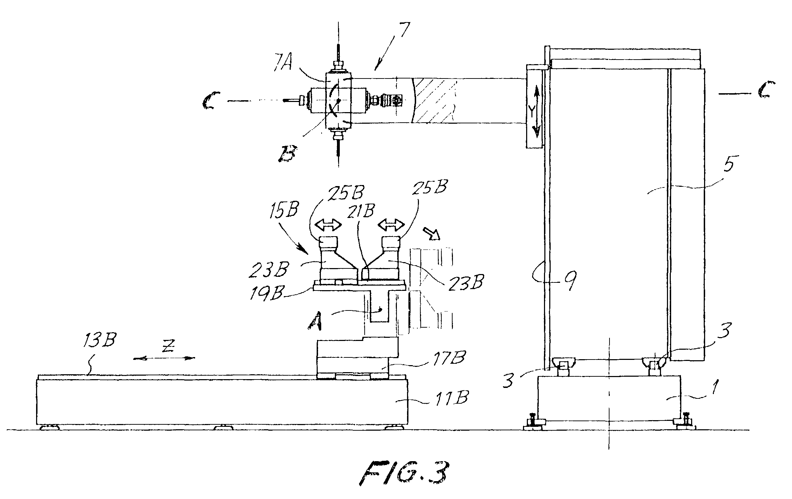

The fact that the uprights 23A, 23B can be adjusted along the guides 21A, 21 B makes it possible to modify the configuration of the crosspieces 25A, 25B and thus ultimately the geometry of the workpiece supporting surface, to adapt it to the size and shape of the workpiece. In Fig. 3, a double arrow associated with each of the crosspieces 25B indicates the possibility of adjustment, while the possibility of oscillation about the auxiliary axis A is represented schematically by the double position indicated for the uprights 23B. In a first configuration (shown in solid lines), the supporting surface delimited by the crosspieces 25B is in a horizontal position, while in the second configuration (shown in faint lines) the workpiece supporting surface is in a vertical position. A further position, rotated through 90° in the clockwise direction from the central position (horizontal supporting surface), may also be provided.

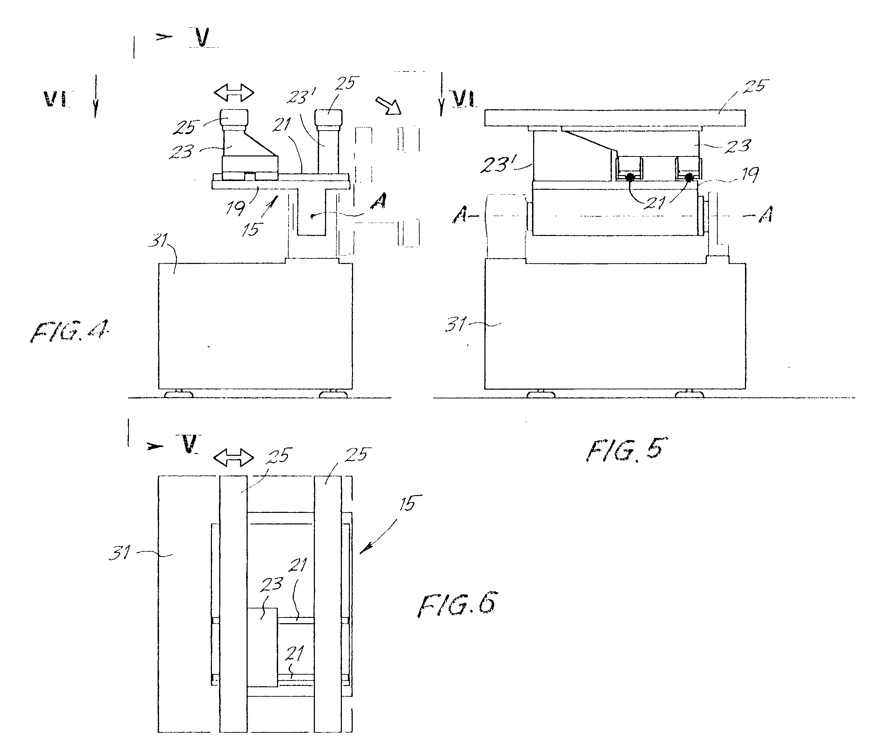

Figs. 4, 5 and 6 show a configuration in which the support means, indicated in a general way by 15, having essentially the same configuration as the means 15A and 15B in Figs. 1 to 3, is placed in a fixed position, on a base 31, instead of on the carriage 17A or 17B. This configuration can be used in combination with a working head provided with autonomous movement along the axis Z. Identical or corresponding parts are indicated by the same reference numbers used in Figs. 1 to 3, with the omission of the letter A or B. One of the two uprights (23) is movable along the guides 21, while the other (23') is fixed.

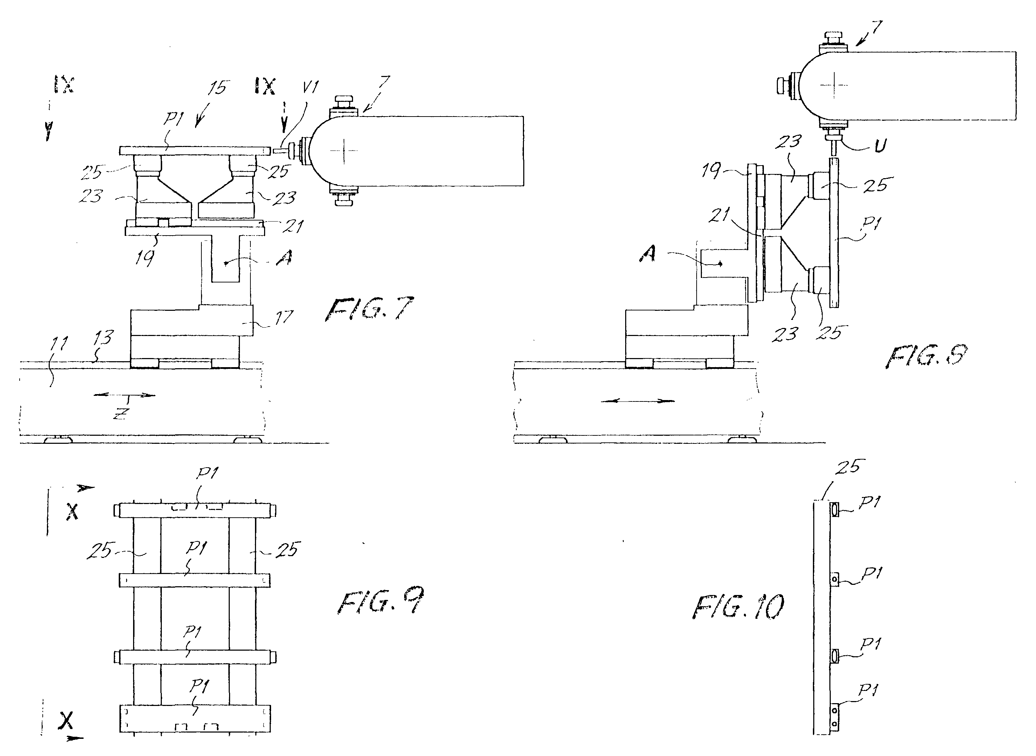

With reference to Figs. 7 to 10, a first possibility of machining provided by the machine shown in Figs. 1 to 3 will now be described. Figs. 7 to 10 show a support means 15 which may alternatively correspond to the means 15A or the support means 15B. This is because the same machining operations can be carried out, in an oscillating cycle, on workpieces mounted on both support means 15A and 15B. The individual elements forming the support means - indicated in a general way by 15 - are identified by the same reference numbers as those used in Figs. 1 to 3 for the means 15A, 15B, with the omission of the letters A and B respectively.

On the crosspieces 25 carried by the uprights 23, which are located with a certain distance between them along the guide 21, there are secured workpieces P1, whose shape is elongate along the axis Z, in other words parallel to the guides 21 for the adjustment of the gap between the uprights 23 and parallel to the guides 13 carried by the auxiliary base 11.

In Fig. 7, the oscillating element 19 is in the horizontal position, so that the surface formed by the crosspieces 25 for supporting and securing the workpieces P1 is in the horizontal position. The working head 7 machines the ends of the workpieces P1 frontally with a tool U1, for example by forming holes or, alternatively, tenons in them. In the schematic plan view in Fig. 9, where the mechanical details, with the exception of the crosspieces 25, are omitted, four different workpieces P1, which have undergone different end machining operations to form tenons, single holes and double holes, are shown. The two outermost workpieces P1 may also be machined on the long outer lateral faces, as shown in the figure. For this purpose, they are fixed at or near the ends of the crosspieces 25, to prevent the collision of the working head 7 with said crosspieces.

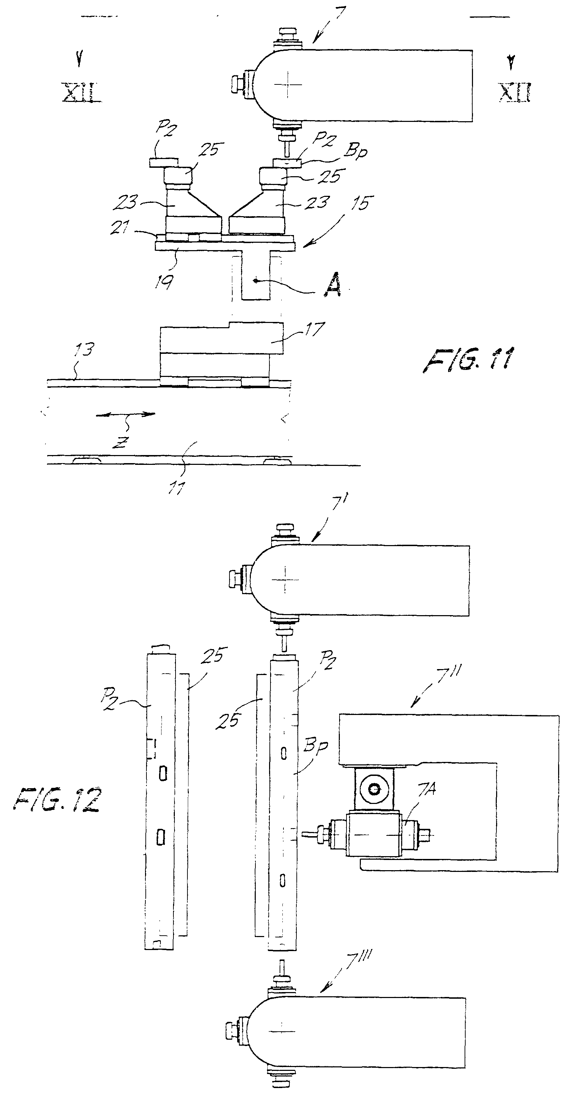

The type of machining carried out is also visible in detail in the front view in Fig. 10. Since the head 7 is provided with different chucks, single or multiple machining operations, which may differ from one piece to another, can be carried out on the various workpieces. A tool magazine may also be provided with means for automatically changing the tools, in order to increase further the possibilities of machining provided by the machine.

With the workpieces P1 arranged on a horizontal surface as shown in Fig. 7, it is possible, by means of suitable movements along the axis Z of the carriage 17 and along the traversing axes X and Y, in addition to the axes B and C of oscillation of the working head 7, to machine with any of the four tools of the working head 7 the upward-facing surface of the workpieces P1, as well as the two outer sides of the pieces P1 located in the end positions on the rectangular surface delimited by the crosspieces 25.

When the oscillating element 19 is rotated about the axis A until the rectangular surface delimited by the crosspieces 25 is brought into the vertical configuration shown in Fig. 8, the working head 7 can machine, with any of the four tools carried by the four chucks arranged to form a cross, the ends of the pieces P1 opposite those which are machined in the configuration shown in Fig. 7.

Figs. 11 and 12 show the same support means 15 shown in Figs. 7 and 8 with a different arrangement of the workpieces, which in this case are indicated by P2. The pieces P2 are arranged parallel to the crosspieces 25, and therefore orthogonally to the traversing axis Z and parallel to the traversing axis X. Identical numbers indicate parts identical or corresponding to those in Figs. 7 and 8. In this configuration, the working head 7 can machine the ends of the pieces P2, the upward-facing surfaces of these pieces, and the edge of the piece P2 nearest the upright 3. In Fig. 12, the working head is shown in three positions, 7', 7" and 7''', for the machining of the ends of one of the pieces P2 and the edge B_{P} of the same piece, while in Fig. 11 the working head is in the position for machining the upper surface of the piece P2.

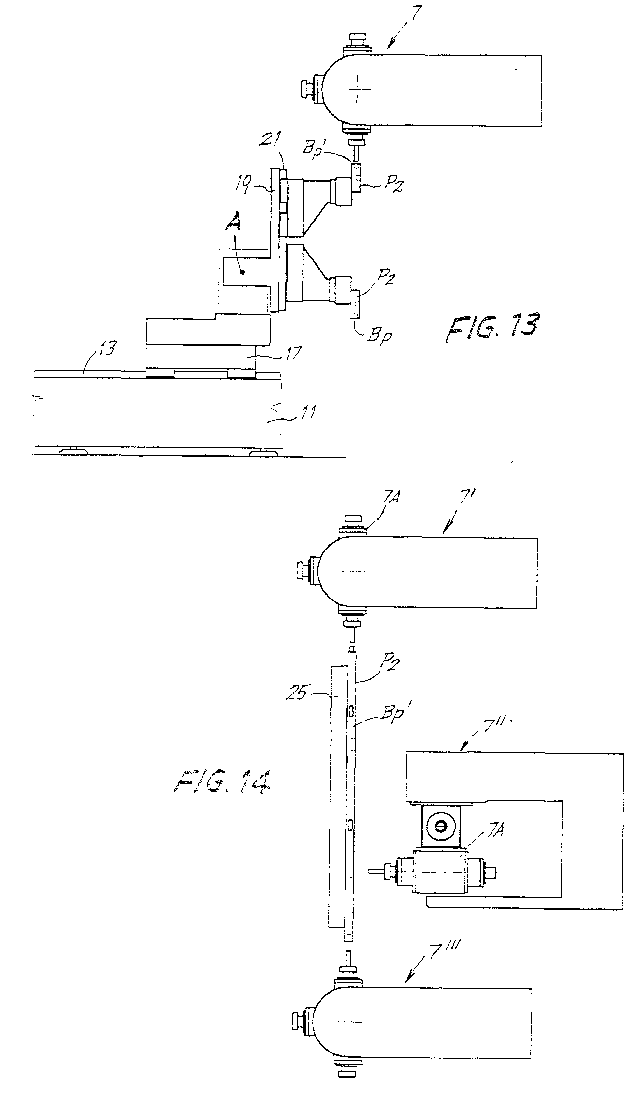

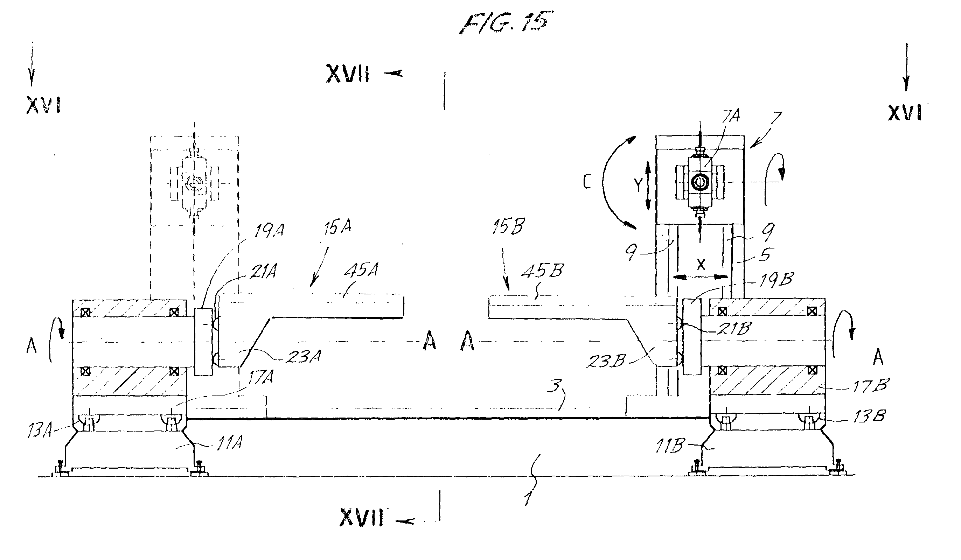

By rotating, through 90°, the oscillating element 19 about the auxiliary horizontal axis of oscillation A the position shown in Fig. 13 is reached, in which the working head 7 can machine, with any of the four tools, the edge B_{P}' of the piece P2 which, in this configuration, is in the highest position. By suitable movements along the traversing axes Y and Z, the working head can also reach the edge B_{P} of the other workpiece P2. As shown in Fig. 14, in this configuration the working head 7 (which is again shown here in three positions, 7', 7" and 7"') can machine both ends of the two pieces P2 in addition to the front surfaces which (in this configuration) face the upright 5.

In the embodiment illustrated in Figs. 15 to 17, identical numbers indicate parts identical or corresponding to those of the embodiment shown in Figs. 1 to 3. This second embodiment differs from the preceding one in that the surfaces for supporting and securing the workpieces (which in the embodiment shown in Figs. 1 to 3 were delimited by the crosspieces 25 located above the sliding guides 13A, 13B) are in this case formed by pairs of crosspieces 45A, 45A and 45B, 45B respectively, mounted so that they project from the carriages 17A, 17B. These carriages again run along guides 13A, 13B carried by auxiliary bases 11A, 11B which are orthogonal to the main base 1, on whose guides 3 runs the upright 5 carrying the working head 7 equipped with four chucks in cross formation 7A and provided with oscillatory or rotary movement about the axis B and about the axis C. Again, X indicates a first horizontal traversing axis and Z indicates the second horizontal traversing axis.

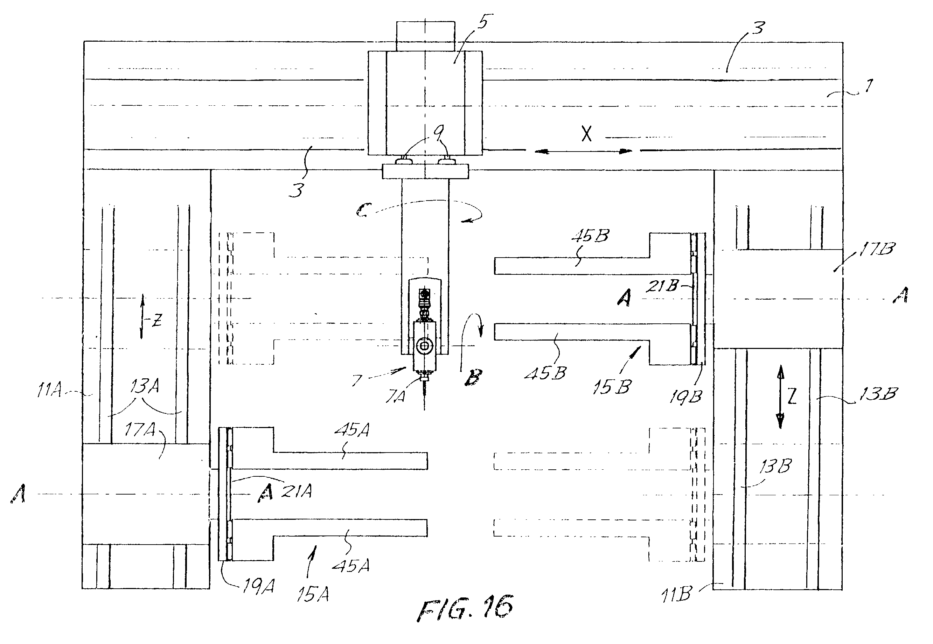

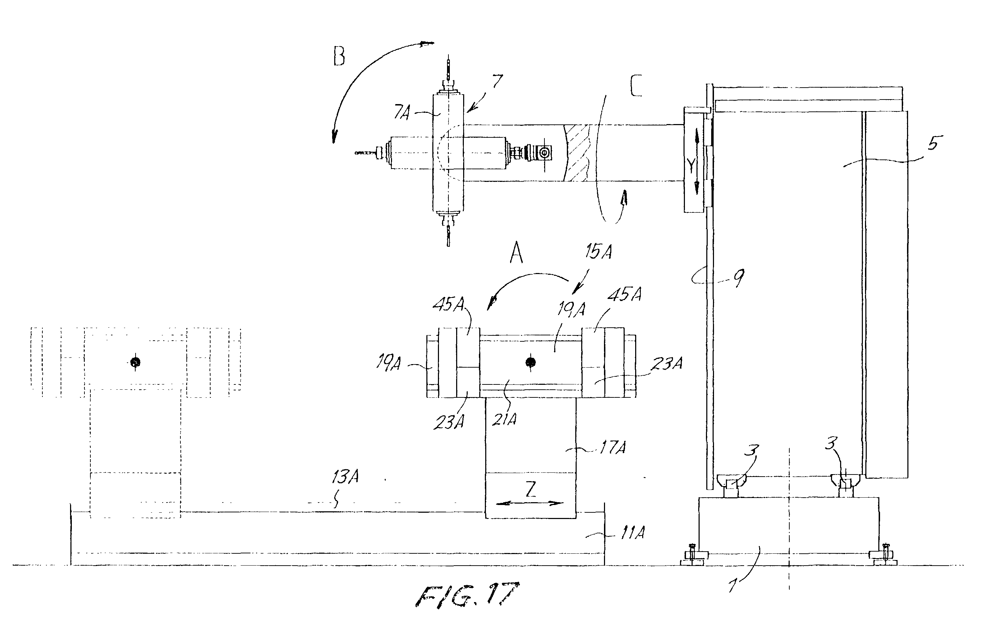

The crosspieces 45A, 45B are adjustable along guides 21A which are parallel to the third horizontal traversing axis Z and are therefore parallel to the guides 13A, 13B. The guides 21A, 21B are integral with a moving element 19A, 19B which oscillates or rotates about an auxiliary horizontal axis of oscillation A. Figs. 16 and 17 show clearly the way in which the support means 15A, 15B are located alternately in the loading and removal position (the support means 15A in Fig. 16) and in the machining position (the means 15B in Fig. 16). In this way an oscillating machining cycle is implemented.

Fig. 16 shows by way of example a possible way of connecting the auxiliary bases 11A, 11B to the main base 1. The connection is omitted in Fig. 17.

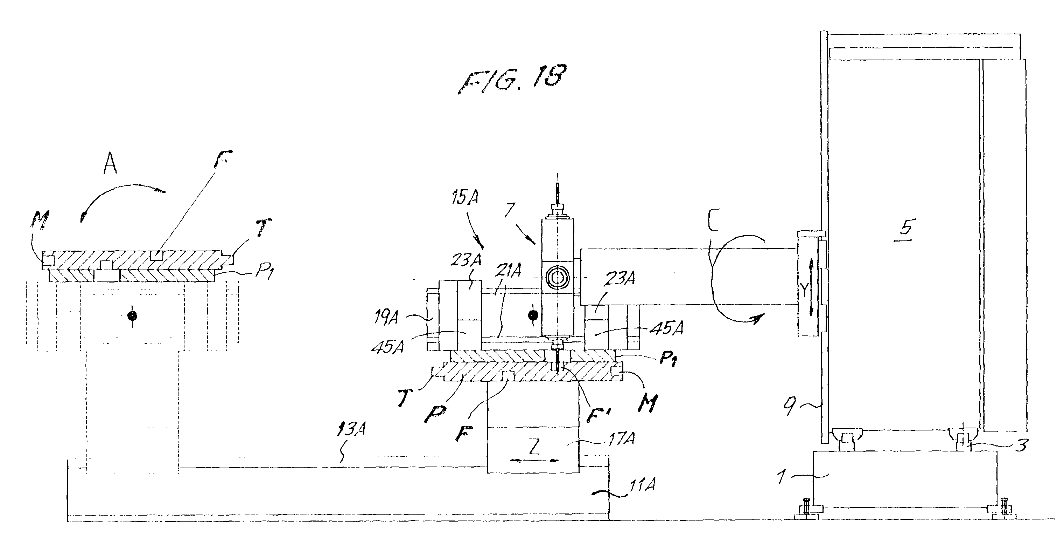

Fig. 18 is a schematic side view of a machine according to the invention, having a structure similar to that shown in Figs. 15 to 17, and used to machine the six faces of a workpiece P. In Fig. 18, in which identical parts are indicated by the same reference numbers as those used in Figs. 15 to 17, purely by way of example the working head 7 is of the single-rotating rather than the double-rotating type: in other words, it has a single axis C of rotation or oscillation of the tools, while it does not have the axis of oscillation B. As shown in Fig. 18, the oscillating or rotating element 19A can rotate through 180° about the auxiliary horizontal axis of oscillation A to permit the additional machining of the face of the piece P which faces the supporting crosspieces 45A. In the illustrated example, the workpiece P rests on an intermediate plane P1 made from plywood or other suitable material which is drilled by the tools of the machine during the machining of the piece P. Holes F, F', tenons T and mortises M or other, for example, are made in the workpiece. Since the crosspieces 45A are adjustable along the axis Z, they can be positioned in such a way as not to interfere with the machining area of the surface of the piece P facing the crosspieces (in other words, the surface temporarily being machined in the configuration in Fig. 18).

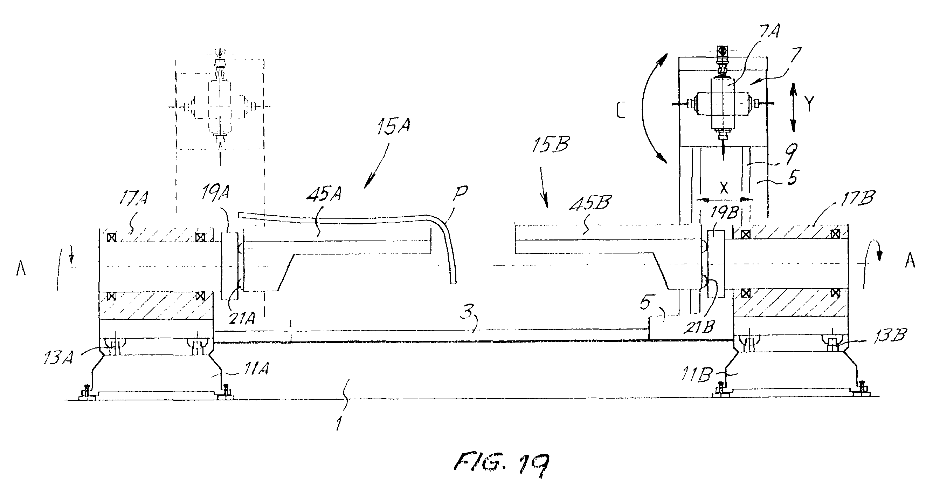

Fig. 19 is a front view of the machine shown in Fig. 18 for machining L-shaped workpieces P. Again, identical numbers indicate parts identical or corresponding to those in Figs. 15 to 17. The working head 7 is, again, by way of example, of the single-rotating type, in other words one having a single axis of oscillation or rotation C. The workpiece P is placed on projecting crosspieces 45A, 45B, and projects downward from them into the area of greatest distance from the corresponding carriage 17A, 17B.

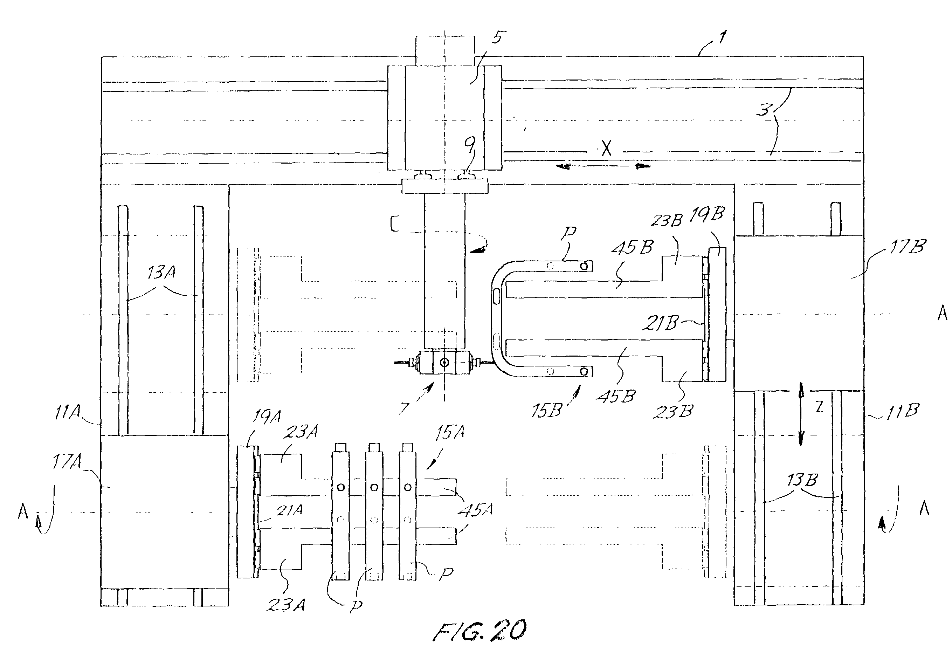

Fig. 20 is a plan view of the machine shown in Fig. 19, where machining is carried out on rectilinear pieces of limited length on the left-hand support means (15A) and a U-shaped curved piece on the right-hand support means (15B). The figure shows the particular versatility of this configuration with the projecting support means. The working head 7 is again of the single-rotating type, but clearly it may be double-rotating, in other words provided additionally with the axis of rotation B, as may also be the case in the embodiments shown in Figs. 18 and 19.

By mounting the support means 45A, 45B so that they project from the carriages 17A, 17B, considerable advantages over the prior art machines are obtainable: the waste and chips which are formed fall into a single central area, remote from the guides 13A, 13B; this makes their removal easy, safe and economical. The working head has more space available for working under the workpiece supporting surfaces for a given height of the workpiece position, since no space is occupied by the bases 11A, 11 B. This also makes it possible to increase the size of the chucks and consequently their power, while maintaining the possibility of work from below, without the need to increase the height at which the workpieces are positioned, which would be unacceptable for ergonomic reasons.

It is to be understood that the drawing shows only an example provided solely as a practical demonstration of the invention. Any reference numbers present in the claims have the purpose of facilitating the reading of the claims, and do not limit the scope of protection of the claims.

## Claims

1. A machine tool for machining pieces of wood or similar, comprising at least a support means (25; 25A, 25B; 45A; 45B) for the workpieces (P; P1; P2) and a working head (7) comprising at least one chuck, said working head being movable about at least a first axis of oscillation (C), along a first horizontal traversing axis (X) and along a second vertical traversing axis (Y), the support means being carried by a carriage (17; 17A; 17B) movable along a third horizontal traversing axis (Z) orthogonal to said first traversing axis (X), **characterized in that**:
- said support means has a dimension which is adjustable along said third traversing axis (Z); and
- said support means oscillates with respect to said carriage about an auxiliary horizontal axis of oscillation (A) which is carried by said carriage (17; 17A; 17B).

2. The machine tool as claimed in claim 1, **characterized in that** said auxiliary horizontal axis of oscillation (A) is parallel to said first horizontal traversing axis (X).

3. The machine tool as claimed in claim 1 or 2, **characterized in that** said at least one support means comprises a pair of uprights (23; 23A; 23B) with a variable gap between them, each of which carries a crosspiece (25; 25A; 25B) which is integral with it, the distance between the crosspieces being adjustable by modification of the gap between said uprights.

4. The machine tool as claimed in claim 3, **characterized in that** it has a system of guides (21; 21A; 21B) along which said uprights are adjustable, said guides extending parallel to said third traversing axis.

5. The machine tool as claimed in claim 4, **characterized in that** said guides are carried by a moving element (19; 19A; 19B) oscillating about said auxiliary horizontal axis of oscillation (A) and supported by said carriage.

6. The machine tool as claimed in one or more of the preceding claims, **characterized in that** said at least one support means can assume two different terminal angular positions about said auxiliary horizontal axis of oscillation (A) and possibly one or more intermediate angular positions between said two terminal positions.

7. The machine tool as claimed in one or more of the preceding claims, **characterized in that** said at least one support means can assume any angular position lying between said two terminal angular positions about said auxiliary horizontal axis of oscillation (A).

8. The machine tool as claimed in Claim 6 or 7, **characterized in that** said terminal angular positions are separated by 90° or 180°.

9. The machine tool as claimed in claim 8, **characterized in that** said auxiliary horizontal oscillation axis (A) is numerically controlled.

10. The machine tool as claimed in one or more of the preceding claims, **characterized in that** it comprises a pair of support means movable independently of each other along corresponding traversing guides parallel to said third horizontal traversing axis (Z).

11. The machine tool as claimed in one or more of the preceding claims, **characterized in that** said at least one support means (45A; 45B) is mounted so that it projects from a vertical support comprising said carriage.

12. The machine tool as claimed in claim 11, **characterized in that** said at least one support means projects from said vertical support in a direction parallel to said auxiliary horizontal oscillation axis (A).

13. The machine tool as claimed in one or more of the preceding claims, **characterized in that** said working head (7) is provided with an oscillatory movement about a further axis of oscillation (B) orthogonal to said first axis of oscillation (C).

14. The machine tool as claimed in one or more of the preceding claims, **characterized in that** said working head has two or four chucks.

15. The machine tool as claimed in one or more of the preceding claims, **characterized in that** said first and said second traversing axis (X, Y) delimit a vertical plane along which said working head is moved, and **in that** two auxiliary bases (11A; 11B) extend orthogonally to said plane and on one side of it, a corresponding support means for the workpieces traversing on each of these bases along said third horizontal traversing axis (Z).

16. The machine tool as claimed in claim 15, **characterized in that** said working head is carried by a vertical upright (5) which is movable along a base (1) orthogonal to said two auxiliary bases (11A; 11B).

## Patentansprüche

1. Werkzeugmaschine zum Bearbeiten von Werkstücken aus Holz oder dergleichen, mit wenigstens einem Aufnahmemittel (25; 25A, 25B; 45A; 45B) für die Werkstücke (P; P1; P2) und einem Bearbeitungskopf (7) mit wenigstens einem Spannfutter, wobei der Arbeitskopf um wenigstens eine erste Drehachse (C), entlang einer ersten horizontalen Bewegungsrichtung (X) und entlang einer zweiten vertikalen Bewegungsrichtung (Y) bewegbar ist, wobei die Aufnahmemittel von einem Wagen (17; 17A; 17B) getragen sind, der entlang einer dritten horizontalen Bewegungsrichtung (Z) rechtwinkelig zu der ersten Bewegungsrichtung (X) bewegbar ist,
**dadurch gekennzeichnet, daß**:
- die Aufnahmemittel eine Abmessung haben, die entlang der dritten Bewegungsrichtung (Z) einstellbar ist; und
- die Aumahmemitteln, die von dem Wagen (17; 17A; 17B) getragen werden, mit Bezug auf den Wagen um eine horizontale Hilfsdrehachse (A) schwingen.

2. Werkzeugmaschine nach Anspruch 1,
**dadurch gekennzeichnet, daß**
die horizontale Hilfsdrehachse (A) parallel zu der ersten horizontalen Bewegungsrichtung (X) verläuft.

3. Werkzeugmaschine nach Anspruch 1 oder 2,
**dadurch gekennzeichnet, daß**
das wenigstens eine Aufnahmemittel zwei Ständer (23; 23A; 23B) mit einem variablen Abstand zwischen denselben aufweist, von denen jeder einen Querträger (25; 25A; 25B) trägt, der einstückig mit diesem ausgebildet ist, wobei der Abstand zwischen den Querträgern durch Änderung des Abstandes zwischen den Ständern einstellbar ist.

4. Werkzeugmaschine nach Anspruch 3,
**dadurch gekennzeichnet, daß**
sie ein System aus Führungen (21; 21A; 21B) hat, entlang welcher die Ständer einstellbar sind, wobei sich die Führungen parallel zu der dritten Bewegungsrichtung erstekken.

5. Werkzeugmaschine nach Anspruch 4,
**dadurch gekennzeichnet, daß**
die Führungen von einem bewegbaren Element (19; 19A; 19B) getragen werden, das um die horizontale Hilfsdrehachse (A) schwingt und von dem Wagen aufgenommen ist.

6. Werkzeugmaschine nach einem oder mehreren der vorstehenden Ansprüche,
**dadurch gekennzeichnet, daß**
das wenigstens eine Aumahmemittel zwei unterschiedliche Endwinkelpositionen bezogen auf die horizontale Hilfsdrehachse (A) einnehmen kann und möglicherweise zwischen diesen zwei Endpositionen eine oder mehrere dazwischen liegende Winkelpositionen einnehmen kann.

7. Werkzeugmaschine nach einem oder mehreren der vorstehenden Ansprüche,
**dadurch gekennzeichnet, daß**
das wenigstens eine Aufnahmemittel um die horizontale Hilfsdrehachse (A) jede Winkelposition einnehmen kann, die zwischen den zwei Endwinkelpositionen liegt.

8. Werkzeugmaschine nach Anspruch 6 oder 7,
**dadurch gekennzeichnet, daß**
die Endwinkelpositionen um 90° oder 180° voneinander getrennt sind.

9. Werkzeugmaschine nach Anspruch 8,
**dadurch gekennzeichnet, daß**
die horizontale Hilfsdrehachse (A) numerisch gesteuert wird.

10. Werkzeugmaschine nach einem oder mehreren der vorstehenden Ansprüche,
**dadurch gekennzeichnet, daß**
sie zwei Aufnahmemittel aufweist, die unabhängig voneinander entlang der entsprechenden Führungen parallel zu der dritten Bewegungsrichtung (Z) bewegbar ist.

11. Werkzeugmaschine nach einem oder mehreren der vorstehenden Ansprüche,
**dadurch gekennzeichnet, daß**
das wenigstens eine Aufnahmemittel (45A; 45B) so montiert ist, daß es gegenüber einer vertikalen Aufnahme, welche der Wagen aufweist, vorsteht.

12. Werkzeugmaschine nach Anspruch 11,
**dadurch gekennzeichnet, daß**
das wenigstens eine Aufnahmemittel gegenüber der vertikalen Aufnahme in einer Richtung parallel zu der horizontalen Hilfsdrehachse (A) vorsteht.

13. Werkzeugmaschine nach einem oder mehreren der vorstehenden Ansprüche,
**dadurch gekennzeichnet, daß**
der Bearbeitungskopf (7) mit einer Drehbewegung um eine weitere Drehachse (B) rechtwinkelig zu der ersten Drehachse (A) versehen ist.

14. Werkzeugmaschine nach einem oder mehreren der vorstehenden Ansprüche,
**dadurch gekennzeichnet, daß**
der Bearbeitungskopf zwei oder vier Spannfutter hat.

15. Werkzeugmaschine nach einem oder mehreren der vorstehenden Ansprüche,
**dadurch gekennzeichnet, daß**
die ersten und zweiten Bewegungsrichtungen (X, Y) eine vertikale Ebene begrenzen, entlang welcher der Bearbeitungskopf bewegt wird, und daß sich rechtwinkelig zu dieser Ebene zwei Hilfsbasen (11A; 11B) erstrecken, und auf einer Seite derselben ein entsprechendes Aufnahmemittel für Werkstücke auf jeder dieser Basen entlang der dritten horizontalen Bewegungsrichtung (Z) bewegbar ist.

16. Werkzeugmaschine nach Anspruch 15,
**dadurch gekennzeichnet, daß**
der Bearbeitungskopf von einem vertikalen Ständer (5) getragen wird, der entlang einer Basis (1) rechtwinkelig zu den zwei Hilfsbasen (11A; 11B) bewegbar ist.

## Revendications

1. Une machine-outil, pour usiner des pièces en bois ou similaires, comprenant au moins un moyen support (25; 25A, 25B; 45A; 45B) pour les pièces à usiner (P; P1; P2) et une tête de travail (7) comprenant au moins un mandrin, ladite tête de travail étant déplaçable autour d'au moins un premier axe d'oscillation (C), le long d'un premier axe transversal (X) horizontal et le long d'un deuxième axe transversal (Y) vertical, le moyen support étant porté par un chariot (17; 17A; 17B) déplaçable le long d'un troisième axe transversal (Z) horizontal, perpendiculaire audit premier axe transversal (X), **caractérisée en ce que** :
- ledit moyen support est de dimension ajustable dans la direction dudit troisième axe transversal (Z) ; et
- ledit moyen support oscille par rapport audit chariot autour d'un axe d'oscillation auxiliaire (A) horizontal, porté par ledit chariot (17; 17A; 17B).

2. Machine-outil selon la revendication 1, **caractérisée en ce que** ledit axe d'oscillation auxiliaire (A) horizontal est parallèle audit premier axe transversal (X) horizontal.

3. Machine-outil selon la revendication 1 ou 2, **caractérisée en ce que** ledit au moins un moyen support comprend une paire de montants (23; 23A; 23B) ayant entre eux un intervalle variable, chacun d'entre eux portant une pièce en croisillon (25; 25A, 25B) réalisée d'une pièce avec eux, la distance entre les pièces en croisillon étant ajustable par modification de l'intervalle entre lesdits montants.

4. Machine-outil selon la revendication 3, **caractérisée en ce qu'**elle comporte un système de guidages (21; 21A; 21B), le long desquels lesdits montants sont ajustables, lesdits guidages s'étendant parallèlement audit troisième axe transversal.

5. Machine-outil selon la revendication 4, **caractérisée en ce que** lesdits guides sont portés par un élément mobile (19; 19A; 19B) oscillant autour dudit axe d'oscillation auxiliaire (A) horizontal et supporté par ledit chariot.

6. Machine-outil selon l'une ou plusieurs des revendications précédentes, **caractérisée en ce que** ledit au moins un moyen support peut prendre deux positions angulaires terminales différentes autour dudit axe d'oscillation auxiliaire (A) horizontal et, éventuellement, une ou plusieurs positions angulaires intermédiaires entre lesdites deux positions terminales.

7. Machine-outil selon l'une ou plusieurs des revendications précédentes, **caractérisée en ce que** ledit au moins un moyen support peut prendre toute position angulaire située entre lesdites deux positions angulaires terminales autour dudit axe d'oscillation auxiliaire (A) horizontal.

8. Machine-outil selon la revendication 6 ou 7, **caractérisée en ce que** lesdites positions angulaires terminales sont séparées de 90° ou 180°.

9. Machine-outil selon la revendication 8, **caractérisée en ce que** ledit axe d'oscillation auxiliaire (A) horizontal est soumis à une commande numérique.

10. Machine-outil selon l'une ou plusieurs des revendications précédentes, **caractérisée en ce qu'**elle comprend une paire de moyens support, déplaçables indépendamment de chaque autre le long desdits guidages transversaux correspondants, parallèlement audit troisième axe transversal (Z) horizontal.

11. Machine-outil selon l'une ou plusieurs des revendications précédentes, **caractérisée en ce que** ledit au moins un moyen support (45A; 45B) est monté de manière à faire saillie depuis un support vertical comprenant ledit chariot.

12. Machine-outil selon la revendication 11, **caractérisée en ce que** ledit au moins un moyen support fait saillie depuis ledit support vertical, dans une direction parallèle audit axe d'oscillation auxiliaire (A) horizontal.

13. Machine-outil selon l'une ou plusieurs des revendications précédentes, **caractérisée en ce que** ladite tête de travail (7) est munie d'une possibilité de déplacement oscillatoire autour d'un axe d'oscillation (B) supplémentaire perpendiculaire audit premier axe d'oscillation (C).

14. Machine-outil selon l'une ou plusieurs des revendications précédentes, **caractérisée en ce que** ladite tête de travail comporte deux ou quatre mandrins.

15. Machine-outil selon l'une ou plusieurs des revendications précédentes, **caractérisée en ce que** ledit premier et ledit deuxième axe transversal (X, Y) délimitent un plan vertical, dans lequel ladite tête de travail est déplacée, et **en ce que** deux bases auxiliaires (11A; 11B) s'étendent perpendiculairement audit plan et sur un coté de celui-ci, un moyen support correspondant pour les pièces à usiner effectuant un déplacement sur chacune de ces bases, le long dudit troisième axe transversal (Z) horizontal.

16. Machine-outil selon la revendication 15, **caractérisée en ce que** ladite tête de travail est portée par un montant (5) vertical, déplaçable le long d'une base (1) perpendiculaire auxdites deux bases auxiliaires (11A; 11B).
